# FASCICULE DE BREVET EUROPEEN

(11) **EP 1 165 422 B1**
(45) Date de publication et mention de la délivrance du brevet: **22.10.2003**
(21) Numéro de dépôt: 00910977.8
(22) Date de dépôt: 17.03.2000
(51) Int. Cl.: B65H 75/14

(54) **JOUE DE TOURET**
SPULENFLANSCH
REEL FLANGE

(30) Priorité: 19.03.1999 DE 19912366; 28.12.1999 FR 9916561
(43) Date de publication de la demande: 02.01.2002
(73) Titulaire: Orzel, Jean Pierre, 59165 Auberchicourt (FR)
(72) Inventeur: Orzel, Jean Pierre, 59165 Auberchicourt (FR)
(74) Mandataire: Hénnion, Jean-Claude
(86) Numéro de dépôt international: FR0000654
(87) Numéro de publication internationale: WO00056653

(56) Documents cités:
- CH-A- 415 225
- DE-A- 3 842 162
- GB-A- 2 173 171

## Description

L'invention se rapporte à une joue de touret.

Elle se rapporte également au touret obtenu.

Le conditionnement de fil en grande longueur se fait sous forme de bobine .

Pour ce faire, le fil est enroulé, soit sur un mandrin provisoire, c'est à dire seulement utilisé pour la réalisation d'une bobine dont la tenue résulte simplement de la manière dont le fil a été enroulé, soit sur un support encore appelé touret.

Classiquement, un touret est constitué de deux joues parallèles maintenues à l'écartement requis par un corps central sur lequel au moins indirectement s'enroule le matériau filiforme.

Ce corps central est généralement tubulaire de manière à pouvoir y introduire un axe pour la manipulation de ces tourets.

Ces tourets peuvent être en matière plastique, ce qui nécessite la réalisation d'un moule relativement onéreux.

Ils peuvent être en métal ce qui en augmentent le poids.

Dans certain cas, tel les tourets en aluminium, il faut prévoir également la réalisation d'un moule.

Mais couramment, les joues sont en bois, matériau restant relativement peu coûteux et facile à travailler.

Pour la réalisation de ces joues, on utilise des planches relativement larges disposées cote à cote pour être maintenues bords à bords par des pièces de liaison qui s'étendent transversalement aux axes longitudinaux des dites planches.

Souvent ces pièces de liaison sont constituées également par des planches en bois formant une deuxième couche de planches croisées avec la première couche.

Pour conférer à l'ensemble, une forme de disque, les bords extrêmes des planches sont, au plus tard après assemblage, rectifiés pour former une portion du cercle délimitant le disque.

Des clous maintiennent le tout.

Le comportement mécanique de ces couches est déplorable.

Parfois, il est prévu un bandage en acier pour limiter l'usure des joues.

La réalisation de ces tourets reste cependant artisanale.

Le document DE-A-3 842 162 décrit une joue de touret selon le préambule de la revendication 1.

Un des résultats que l'invention vise à obtenir est une joue de touret qui soit facile à construire.

A cet effet, l'invention a pour objet une joue de touret comprenant :
- d'une part, des pièces en bois disposées dans un plan pour constituer un disque et,
- d'autre part des moyens dits d'association pour maintenir en position requise les dites pièces en bois,
cette joue étant caractérisé en ce que :
- les pièces en bois ont chacune une forme globale de secteur qui, mises cote à cote, reconstituent un disque et
- les moyens d'association comprennent, d'une part, une ceinture s'appuyant sur la périphérie du disque et, d'autre part, deux flasques centrées sur le disque venant maintenir la zone centrale du disque .

L'invention sera bien comprise à l'aide de la description ci-après faite à titre d'exemple non limitatif en regard du dessin ci-annexé qui représente schématiquement :

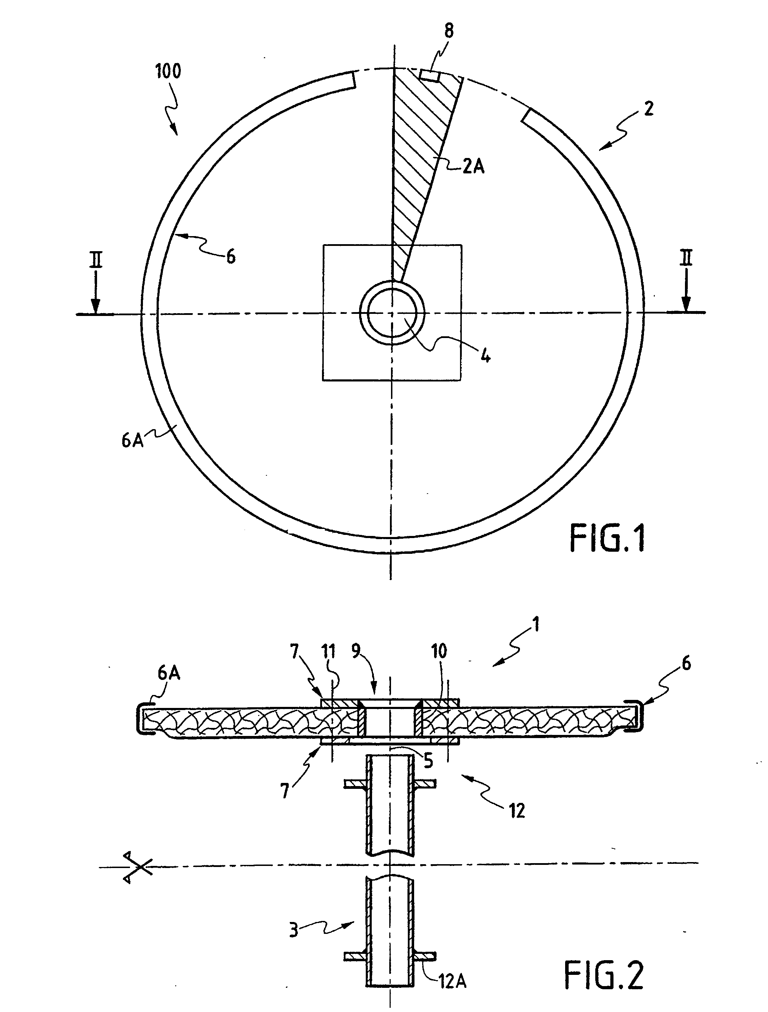

- figure 1 : une vue de face d'une joue d'un touret,
- figure 2 : une vue en coupe axiale d'un touret en cours d'assemblage,
- figure 3 : un détail de la figure 2 avant assemblage,
- figure 4 : une vue éclatée d'une variante de réalisation.

En se reportant au dessin , on voit un touret 1.

Classiquement, un touret 1 est constitué de deux joues 2 parallèles maintenues à l'écartement requis par un corps 3 central sur lequel, au moins indirectement, s'enroule le matériau filiforme.

Ce corps 3 central est généralement tubulaire de manière à pouvoir y introduire un axe pour la manipulation de ces tourets.

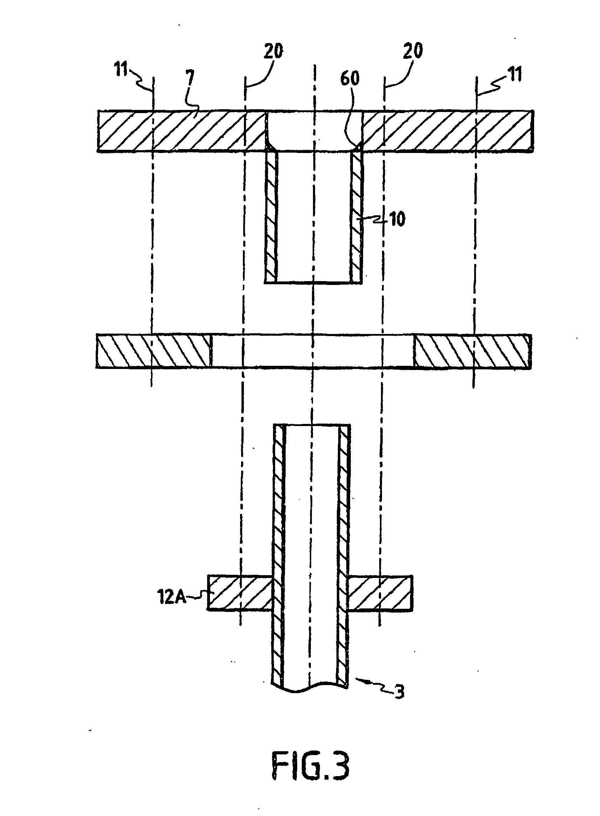

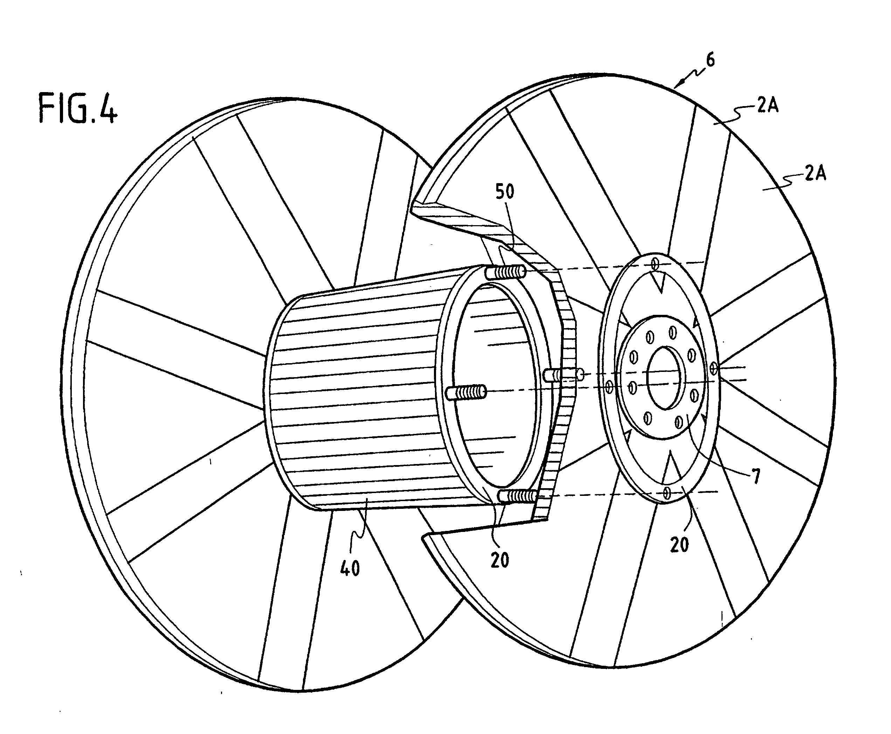

En l'occurrence, ce corps central est un tube métallique (figure 2) ou un corps en bois (figure 4).

Chacune des joues 2 du touret 1 comprend, d'une part, des pièces 2A en bois disposées dans un plan pour constituer un disque et, d'autre part, des moyens 100 dits d'association pour maintenir en position requise les dites pièces en bois.

Cette joue 2 présente en outre une découpe 4 centrée sur son axe 5 de révolution pour permettre de la saisir.

Selon une caractéristique de l'invention :
- les pièces 2A en bois ont chacune une forme globale de secteur qui, mises côte à côte, reconstituent un disque et
- les moyens d'association comprennent, d'une part, une ceinture 6 s'appuyant sur la périphérie du disque et, d'autre part, deux flasques 7 centrées sur le disque venant maintenir la zone centrale du disque.

Avantageusement, la ceinture 6 a une section en U de sorte que les flancs 6A du U calent latéralement les secteurs 2A.

Cette ceinture 6 est réalisée à partir d'un feuillard métallique mis en forme ou d'un profilé déjà mis en forme pour être de section en U, lequel est courbé pour qu'il prenne la forme d'un cerceau.

Les deux extrémité du feuillard ou profilé sont alors réunies, de préférence, par soudure.

Avantageusement, le secteur 2A se situant dans la zone de la soudure des deux extrémités de la ceinture présente au droit de cette soudure une entaille 8 de sorte que, lors de l'opération de soudure, le bois ne risque pas de s'enflammer.

Avantageusement, les flasques 7 présentent une découpe 9 axiale et l'une d'elles est soudée sur l'extrémité d'une entretoise 10 tubulaire.

Plus précisément, c'est la flasque externe qui est fixée sur l'entretoise 10.

La seconde flasque est maintenue sur la première par des boulons 11 traversant certains des secteurs de manière à former un moyeu.

Le diamètre de la découpe axiale de la flasque 7 se situant à l'extérieur du touret est égal au diamètre externe de l'entretoise tubulaire sur laquelle elle se fixe par soudure (voir figure 3).

Dans l'exemple représenté, la flasque précitée n'est pas engagée sur l'entretoise mais légèrement décalée et c'est le cordon de soudure 60 qui assure la liaison.

L'autre flasque, celle s'appuyant sur la face dite interne de la joue, a une découpe 9 plus large que le diamètre externe de l'entretoise 10 et cette flasque est donc maintenue par des boulons 11 dont les tiges traversent les deux flasques et les pièces en bois de manière à venir pincer la partie centrale de la joue.

Le diamètre interne de l'entretoise tubulaire est sensiblement égal au diamètre externe du corps central lorsque celui-ci est monté sur un axe.

Les joues sont alors, par des moyens 12 de fixation, solidarisées au corps central pour former alors un touret.

Ces moyens de fixation pourraient certes être réalisés par des points de soudure ou un cordon de soudure mais il est plus intéressant que ces moyens de fixation soient démontables, tels des boulons 20.

A cet effet, le corps central présente à distance de chacune de ces extrémités une butée 12A qui s'étend transversalement à l'axe longitudinal dudit corps central et des tirants (non représentés) assurent le rapprochement des joues venant alors en appui sur les butées précitées.

La butée 12A est de section externe identique à la section interne de la découpe 9 de la flasque interne de manière à pouvoir se caler à l'intérieur de cette découpe.

Cette découpe 9 sera, de préférence, circulaire et la flasque sera carrée.

Il est ainsi facile d'échanger une joue de touret si elle est brisée ou de la remplacer par une autre d'un diamètre différent.

Parfois, l'un des secteurs sera en un autre matériau que le bois, tel le métal.

Tel que cela apparaît en figure 4, on a représenté une autre forme de touret.

Comme on peut le voir, la forme des secteurs peut être sensiblement différente pour former les rayons d'une roue entre lesquels se logent des secteurs de dimensions différentes.

Les secteurs les plus étroits peuvent, par exemple, être en bois plus rigide que les secteurs les plus étendus.

Le corps du touret est réalisé également avec des planches de bois pour constituer un cylindre 40.

Des flasques 20 permettent de rapporter et de maintenir cette partie cylindrique 40 sur les joues de touret.

On fait appel alors à des tirants 50.

## Revendications

1. Joue de touret comprenant, d'une part, des pièces (2A) en bois en forme de secteur et, d'autre part, des moyens (100) dits d'association pour maintenir en position requise les dites pièces en bois, ces moyens d'association comprenant une ceinture (6) s'appuyant sur la périphérie du disque,
cette joue de touret étant **CARACTERISEE en ce que** :
- les pièces (2A) en bois sont disposées dans un seul plan et sont, en outre, maintenues par deux flasques (7) centrées sur le disque formé pour maintenir la zone centrale dudit disque,
- une entretoise (10) est fixée sur la flasque (7) située à l'extérieur de la joue de touret pour constituer un moyeu et,
- la flasque (7) située à l'intérieur de la joue de touret présente une découpe axiale de diamètre plus large que le diamètre externe de l'entretoise (10).

2. Joue selon la revendication 1 **caractérisée en ce que** la ceinture (6) a une section en U de sorte que les flancs (6A) du U calent latéralement les secteurs (2A).

3. Joue selon la revendication 2 **caractérisée en ce que** le secteur (2A) se situant dans la zone de la soudure des deux extrémités de la ceinture (6) présente au droit de cette soudure une entaille (8) de sorte que, lors de l'opération de soudure, le bois ne risque pas de s'enflammer.

4. Joue selon la revendication 1 **caractérisée en ce que** les flasques (7) sont maintenues par des boulons (11) dont les tiges traversent les deux flasques et les pièces en bois de manière à venir pincer la partie centrale de la joue.

5. Joue selon la revendication 1 **caractérisée en ce que** le diamètre interne de l'entretoise tubulaire (10) est sensiblement égal au diamètre externe d'un corps central (3) sur lequel la joue est destinée à s'engager.

6. Touret comprenant un corps central et au moins une joue selon l'une quelconque des revendications 1 à 5 **caractérisé en ce que** les joues sont par des moyens (12) de fixation solidarisées au corps central pour former un touret, le corps central présentant à distance de chacune de ces extrémités une butée (12A) qui s'étend transversalement à l'axe longitudinal dudit corps central, la butée (2A) venant se caler à l'intérieur de la découpe (9) de la flasque (7) interne.

## Patentansprüche

1. Seitenteil für Kabeltrommeln, welcher zum einen sektorförmige Holzteile (2A) und zum anderen so genannte Anordnungseinrichtungen (100) aufweist, um die Holzteile in der gewünschten Position zu halten, wobei die Anordnungseinrichtungen ein Umfassungsteil (6) aufweist, das sich auf dem Umfang der Scheibe abstützt,
**dadurch GEKENNZEICHNET, dass**:
- die Holzteile (2A) in einer einzigen Ebene angeordnet sind und darüber hinaus von zwei Flanschen (7) gehalten werden, welche auf der gebildeten Scheibe zentriert sind, die zum Halten des Mittelbereichs der Scheibe angebracht sind,
- ein Steg (10) auf dem auf der Außenseite des Seitenteils angeordneten Flansch (7) so befestigt ist, dass er eine Nabe bildet, und
- der auf der Innenseite des Seitenteils vorgesehene Flansch (7) einen axialen Ausschnitt aufweist, dessen Durchmesser größer als der Außendurchmesser des Stegs (10) ist.

2. Seitenteil nach Anspruch 1, **dadurch gekennzeichnet, dass** das Umfassungsteil (6) einen U-förmigen Querschnitt aufweist, so dass die Schenkel (6A) der U-förmigen Ausbildung die Sektoren (2A) seitlich festkeilen.

3. Seitenteil nach Anspruch 2, **dadurch gekennzeichnet, dass** der Sektor (2A), der sich im Schweißbereich der beiden Enden des Umfassungsteils (6) befindet, rechts von dieser Schweißstelle einen Ausschnitt (8) aufweist, so dass während des Schweißvorgangs keine Gefahr besteht, dass sich das Holz entzündet.

4. Seitenteil nach Anspruch 1, **dadurch gekennzeichnet, dass** die Flansche (7) von Bolzen (11) gehalten werden, deren Schäfte durch die beiden Flansche und die Holzteile in der Weise hindurch geführt sind, dass sie das Mittelteil des Seitenteils festklemmen.

5. Seitenteil nach Anspruch 1, **dadurch gekennzeichnet, dass** der Innendurchmesser des rohrförmigen Stegs (10) im wesentlichen gleich dem Außendurchmesser eines in der Mitte liegenden Korpus (3) ist, auf welchem das Seitenteil in Eingriff gelangen soll.

6. Kabeltrommel mit einem in der Mitte liegenden Korpus und mindestens einem Seitenteil nach einem der Ansprüche 1 bis 5, **dadurch gekennzeichnet, dass** die Seitenteile zur Bildung einer Kabeltrommel mittels Befestigungseinrichtungen (12) fest mit dem in der Mitte liegenden Korpus verbunden sind, wobei der in der Mitte liegende Korpus im Abstand von jedem seiner Enden einen Anschlag (12A) aufweist, der sich quer zur Längsachse des in der Mitte liegenden Korpus erstreckt, wobei sich der Anschlag (2A) im Inneren des Ausschnitts (9) des inneren Flansches (7) verkeilt.

## Claims

1. A reel flange comprising, on the one hand, segmental parts (2A) made of wood and, on the other hand, connecting means (100) for holding the said wooden parts in the required position, these connecting means comprising a band (6) supported against the circumference of the disc,
this reel flange being **characterised in that**:
- the wooden parts (2A) are disposed in a single plane and, in addition, are held by two plates (7) centered on the formed disc in order to support the central region of the said disc;
- a spacer (10) is fixed to the plate (7) arranged on the outside of the reel flange so as to form a hub; and
- the plate (7) arranged on the inside of the reel flange has an axial opening with a diameter larger than the outer diameter of the spacer (10).

2. A flange according to claim 1, **characterised in that** the band (6) has a U-shaped cross-section so that the flanks (6A) of the U laterally fasten the segments (2A).

3. A flange according to claim 2, **characterised in that** the segment (2A) located in the region of the weld of the two ends of the band (6) has a notch (8) at right angles to this weld so that there is no danger of the wood catching fire during the welding operation.

4. A flange according to claim 1, **characterised in that** the plates (7) are held by bolts (11), the shanks of which extend through the two plates and the wooden parts so as to grip the central portion of the flange.

5. A flange according to claim 1, **characterised in that** the inner diameter of the tubular spacer (10) is substantially equal to the outer diameter of a central member (3), on which the flange is intended to engage.

6. A reel comprising a central member and at least one flange according to any one of claims 1 to 5, **characterised in that** the flanges are connected to the central member by fixing means (12) so as to form a reel, the central member having, at a distance from each of its ends, a stop (12A) extending transversely to the longitudinal axis of the said central member, the stop (12A) being keyed inside the opening (9) of the inner plate (7).
